# EUROPEAN PATENT SPECIFICATION

(11) **EP 3 971 248 B1**
(45) Date of publication and mention of the grant of the patent: **08.11.2023**
(21) Application number: 20197623.0
(22) Date of filing: 22.09.2020
(51) Int. Cl.: C09D 11/03, C09D 11/037, C09D 11/107, D06P 5/00

(54) **FORMALDEHYDE-FREE PRINTING INK FOR PRINTING ONTO FABRICS**
FORMALDEHYDFREIE DRUCKFARBE ZUM BEDRUCKEN VON TEXTILIEN
ENCRE D'IMPRESSION SANS FORMALDÉHYDE POUR L'IMPRESSION SUR DES TISSUS

(43) Date of publication of application: 23.03.2022
(73) Proprietor: CHT Germany GmbH, 72072 Tübingen (DE)
(72) Inventor: Haas, Helmuth, 72072 Tübingen (DE); Traub, Armin, 72793 Pfullingen (DE); Gottwald, Lukas-Grischa, 72072 Tübingen (DE)
(74) Representative: Maiwald GmbH

(56) References cited:
- WO-A2-2012/069599
- GB-A- 2 305 941
- US-A- 4 398 914
- US-A- 4 400 174
- US-A1- 2002 042 353

## Description

### Technical Field

The present invention relates to a discharge printing agent, a method of discharge printing using said discharge printing agent and a textile fabric comprising a printed pattern obtainable by said method of discharge printing.

### Background of the Invention

Textile or fabric printing is a technique used to apply a pattern or design onto a fabric. There are various methods available for textile printing and an attractive technique for printing onto fabrics is discharge printing.

In discharge printing, a discharge agent (which predominantly acts as a bleaching agent) is printed onto previously dyed fabrics to remove some or all of the colour. Thus, the fabric is usually formed of cellulosic fibres such as cotton or at least predominantly formed of cellulosic fibres and is dyed with a suitable dyestuff, the chromophore of which can be removed by a discharge agent under appropriate conditions. A discharge agent is also known as a chromogen-destroying additive or an activator and acts as a reducing agent. A printing ink (also referred to as printing paste in view of its relatively high viscosity) is then applied to the dyed fabric, where the printing ink comprises a discharge agent which is capable of destroying the chromogenic system of the dyes under the appropriate conditions (dyes that are dischargeable usually are reactive dyes, e.g. those containing azo groups, anthraquinone substructures, phthalocyanine substructures, formazane substructures, or dioxazine substructures). Such conditions usually involve heating and/or steaming. This reduction process results in the removal of colour from the dyed fabric in the areas where the printing ink comprising the discharge agent has been applied which provides a coloured fabric with a design of substantially uncoloured material. The printing ink may also contain a colouring agent such as a dye or a pigment which is more resistant to the discharge agent than that of the dye in the fabric. When a pigment is present in the printing ink, the ink further comprises a binder for fixing the pigment to the fabric while the discharge process is taking place.

The discharge agent is a critical chemical agent for implementation of the discharge printing process.

At present, discharge agents commonly used in the printing and dyeing industry are formaldehyde sulfoxylate-type reductants, such as solid rongalite C (sodium formaldehyde sulfoxylate) and decrolin (zinc formaldehyde sulfoxylate), pasty leucotrope H (calcium formaldehyde sulfoxylate) and a liquid discharge agent Rongalit ST Liq. However, these discharge agents have the following drawbacks:
(1) Free formaldehyde is released. This implies that it is usually impossible for the printed products to meet requirements defined in ecological standards for textiles. In particular in the pigment discharge printing, i.e. when application of the discharge agent, a pigment and a binder for immobilizing the pigment are simultaneously applied, it is more difficult to remove the residual formaldehyde-contained discharge agent due to the presence of said binder. Severe washing may thus become necessary which represents an undesirable process step and is not in line with the intended water-free printing.
(2) The commonly used discharge agents tend to deteriorate during preparation and storage of a discharge printing ink. This can have a significant impact on the viscosity of the discharge printing ink, for instance, which would require a continuous adaptation of processing parameters, which is tedious and can significantly increase process complexity. In a worst case scenario, this can render the ink unsuitable for the intended use. In order to circumvent this drawback, such discharge printing ink has to be prepared in relatively small batches. This renders the preparation and use of such discharge printing ink tedious and increases costs.
(3) The commonly used discharge agents all contain metal ions (such zinc as mentioned hereinabove), even heavy metal ions. For instance, zinc compounds such as zinc acetate or zinc hydroxide are included in discharge printing inks in order to facilitate the chromogen-destroying step. These zinc compounds are classified as a threat to health and environment by the European Chemicals Agency (ECHA). Therefore, the maximum amount of zinc in textile products is limited by standards. For instance, the maximum amount of zinc in textile products certified as product class I for babies according to the Oeko-Tex 100 Standard is set to 750 mg/kg. Independently, synthetic thickeners used in pigment printing are in most cases unstable in the presence of (heavy) metal ions, causing the implementation of the pigment discharge printing process difficult.

Thiourea dioxide, also called amino(imino)methanesulfinic acid with molecular formula of (NH)(NH₂)CSO₂H, is stable when stored dry at room temperature with neither oxidability nor reducibility, and dissolves when heated or in alkaline conditions. Under these conditions, it releases sulfoxylate with strong reducibility. Thiourea dioxide does not release formaldehyde and does not contain heavy metal ions, so it can be regarded an environmentally-friendly chemical. Therefore, thiourea dioxide is suitable for being used as a discharge agent for discharge printing and solves the above three problems which exist in formaldehyde sulfoxylate type reductants. However, the use of thiourea dioxide as a discharge agent for printing has also revealed some inherent problems:
(1) Under normal conditions, thiourea dioxide is a white and odorless crystalline solid having a relatively low solubility of only 26.7 g/l in water at a temperature of 20 °C. It can therefore be difficult to fully dissolve and uniformly disperse thiourea dioxide in a sufficiently high amount in the discharge printing ink. Instead, thiourea dioxide can be present in a printing ink paste non-uniformly in the form of granular crystals. This can negatively affect reduction effectiveness.
(2) In order to improve dispersibility of thiourea dioxide, thiourea dioxide should be mechanically ground in advance. Research has shown that wet grinding using water as medium, in comparison to a dry grinding process, results in a smaller particle size, better dispersibility and better discharge effect of the discharge agent thiourea dioxide. However, storage stability of thiourea dioxide subjected to wet grinding decreases due to contact with oxygen in air as oxygen may also be dissolved in water used for dissolving thiourea dioxide. These drawbacks (summarized in US 2014/0148518 A1 and EP 0 799 930 A2, for instance) have greatly restrained broad use of thiourea dioxide as discharge agent for printing.
(3) A further drawback of thiourea dioxide is likewise mentioned in US 2014/0148518 A1. It tends to decompose in the presence of water and oxygen. This drawback becomes particularly relevant when the compound is formulated in discharge printing agent which usually are aqueous formulations. While the decomposition can reduce the content of thiourea dioxide in the formulation which can affect usability of the formulation as a discharge printing agent, the decomposition also results in a decrease of the pH value. This implies that the viscosity of the formulation can be adjusted using thickeners which are not sensitive to pH. For instance, the viscosity imparted to aqueous formulations by means of polyacrylic acid-based thickeners is dependent on the pH value which is the result of the carboxyl groups in the polymer. A decrease of the pH results in a decrease of the viscosity imparted by a polyacrylic acid-based thickener. For this reason, it is necessary to adjust the viscosity of aqueous formulations of thiourea dioxide to be used as discharge printing agent using thickeners that are not pH-sensitive. For this purpose, cellulose-based thickeners, natural gums such as guar gum, and/or other carbohydrate-based thickeners are commonly used, for instance. The use of thickeners of these types results to further drawbacks. Firstly, thickeners based on natural polymers are prone to infestation by microorganism which degrade the thickeners at least partially such that the viscosity-imparting properties deteriorate. Secondly, thickeners based on natural polymers tend to affect the softness and hand of a fabric treated with a discharge printing agent containing such thickeners. In order to remove the thickeners from the fabric and restore the softness and hand of the fabric, a separate washing step can become necessary. The need to carry out a washing step increases the overall costs of the discharge printing process and results in an increase of the costs of the printed fabric.

In order to overcome these drawbacks, sulfinic acid compounds such as 2-hydroxy-2-sulfinatoacetic acid

HO₂S-CH(OH)-COOH ("HSSA")

and the corresponding disodium salt

Na O₂S-CH(OH)-COO Na ("HSSA-Na")

have been proposed as a discharge agent. For instance, US 2002/042353 A1 discloses a textile discharge printing paste that is suitable for printing on back fabric and comprises 600 g of a base formulation and 213 g of the disodium salt of 2-hydroxy-2-sulfinatoacetic acid, wherein the base formulation contains
434 g of water,
100 g of potash,
6 g of carboxymethylated starch as a thickener,
40 g of a combination of guar ether and starch ether,
14 g of glycerol, and
6 g of a self-emulsifying mineral oil.

This mixture is applied to the black fabric and dried in a drying cabinet. The fabric was then steamed (i.e. treated with steam) at 102 °C for 10 minutes, during which time the dye was reduced. The fabric was thoroughly rinsed to remove residues of thickener and other chemicals, and the undyed fabric became apparent at those places where the reducing agent had previously been applied. It was concluded that the disodium salt of 2-hydroxy-2-sulfinatoacetic acid can thus be used in textile discharge printing according to current technology.

However, it was also found that disadvantages are inherent to the use of a sulfinic acid compound such as HSSA or HSSA-Na as discharge agent. In the course of using sulfinic acid compounds as discharge agents, decomposition products are formed which have a repugnant odour, most likely as a result of the presence of a sulfur atom in organic decomposition products. Therefore, it can be necessary or even indispensable to rinse or intensively wash any fabric after it has been printed using these sulfinic acid compounds as discharge agents in order to render it usable. In particular, if the fabric is to be used as a garment, washing of the fabric can be imperative. The need to carry out a washing step after discharge printing increases the overall costs of the discharge printing process and results in an increase of the costs of the printed fabric. In an extreme case scenario, a discharge printing process using a sulfinic acid compound such as HSSA or HSSA-Na as discharge agent is uneconomical.

In view of these drawbacks, the need persists to provide a discharge printing agent that can be used in a safe and economic manner. In particular, the need persists to provide a discharge printing process that is safe and economic. In order to improve known discharge printing processes as regards safety, the use of chemicals which release compounds that are hazardous (such as formaldehyde in the case of sodium formaldehyde sulfoxylate) should be avoided. Furthermore, in order to improve known discharge printing processes economically, the need to carry out a washing step in order to remove vile smelling compounds (such as organic sulfur compounds in the case of sulfinic acid compounds) should be avoided. At the same time, it should be possible to formulate the discharge printing agent used in the process in a convenient manner.

Therefore, it is a first object of the present invention to provide a discharge printing process that can be carried out without releasing hazardous compounds such as formaldehyde and does not require a final washing step in order to remove vile smelling compounds. It is a second object of the present invention to provide a discharge printing agent that can be conveniently used in a discharge printing process.

### Brief Description of the Invention

Surprisingly, it was found that the drawbacks described hereinabove with respect to the prior art can be overcome and the objects of the present invention can be achieved by the provision of a discharge printing process and a discharge printing agent as described in the following.

Thus, in a first aspect, the present invention is directed to a discharge printing agent that does not release hazardous and/or vile smelling compounds when used in a discharge printing process and, therefore, does not require a washing step.

In a second aspect, the present invention is directed to a precursor composition from which a discharge printing agent according to the first aspect of the present invention can be conveniently prepared.

In a third aspect, the present invention is directed to a method of preparing a discharge printing agent according to the first aspect of the present invention.

In a fourth aspect, the present invention is directed to a discharge printing process using the discharge printing agent according to the first aspect of the present invention.

In a fifth aspect, the present invention is directed to a fabric comprising a printed pattern obtainable by a discharge printing process according to the fourth aspect of the present invention.

The invention is described in detail in the following.

### Detailed Description of the Invention

### Aspect (1): Discharge printing agent

In a first aspect, the present invention provides a discharge printing agent comprising
(a) a sulfinic acid compound of formula (I)

   MO-S(=O)-C(R¹)(R²)(R³) (I)

   or a salt thereof, wherein
   R¹ is selected from the group consisting of H and NR⁴R⁵;
   R² is selected from the group consisting of H, OH, alkyl, alkenyl, cycloalkyl and aryl,
   wherein the alkyl, alkenyl, cycloalkyl, and aryl group are unsubstituted or substituted with 1, 2 or 3 substituents which are independently selected from alkyl having 1-6 carbon atoms, OH, alkoxy having 1-6 carbon atoms, halogen and CF₃; and
   R³ is COOM, SO₃M, COR⁴, CONR⁴R⁵ or COOR₄;
   each M is independently selected from the group consisting of H, N(R⁴)₄⁺, a monovalent metal ion or divalent metal ion of the groups Ia, IIa, IIb, IVa or VIIIb of the Periodic Table of the Elements;
   wherein each R⁴ and R⁵ is independently selected from the group consisting of H or an alkyl group having 1-6 carbon atoms;
(b) a thickener comprising a polymer having carboxylic acid groups -COOH or carboxylate groups -COO- attached to the polymeric backbone;
(c) an odour control agent, and
(d) water,
wherein the discharge printing agent has a viscosity of 2500-150000 mPa·s.

In preferred embodiments, the components contained in the discharge printing agent are characterized by means of the following features.

### (a) Sulfinic acid compound of formula (I)

In the sulfinic acid compound of formula (I), M is preferably selected from the group consisting of H, ammonium ions, alkali metal ions, alkaline earth metal ions, and Zn²⁺, more preferably rom the group consisting of H, N(R⁴)₄⁺, Li⁺, Na⁺, K⁺, Mg²⁺, and Ca²⁺. Even more preferably, R¹ is H, R² is OH, and R³ is COOM, wherein M is independently selected from the group consisting of H, NH₄⁺, Li⁺, Na⁺, and K⁺. Still more preferably, each M is independently selected from the group consisting of H and Na⁺.

A preferred sulfinic acid compound of formula (I) is commercially available from CHT Germany GmbH (Tübingen, Germany).

### (b) Thickener

The thickener of the discharge printing agent comprises a polymer having carboxylic acid groups -COOH or carboxylate groups -COO- attached to the polymeric backbone. In preferred embodiments, the thickener comprises a polymer having repeating units derived from
(i) a carboxylic acid having at least one carboxylic acid group, 3-12 carbon atoms, and at least one olefinic carbon-carbon double bond, of which one olefinic carbon-carbon double bond is in α,β-position to at least one carboxyl group and/or an olefinic carbon-carbon double bond formed between two carbon atoms of which one is not linked to a further carbon atom, and
(ii) a carboxylic acid ester having 4-42 carbon atoms and at least one olefinic carbon-carbon double bond, of which one olefinic carbon-carbon double bond is in α,β-position to the carboxyl group and/or an olefinic carbon-carbon double bond formed between two carbon atoms of which one is not linked to a further carbon atom,
by polymerization of said olefinic carbon-carbon double bond in α,β-position to one carboxyl group and/or said olefinic carbon-carbon double bond formed between two carbon atoms of which one is not linked to a further carbon atom.

It is understood that an olefinic carbon-carbon double bond formed between two carbon atoms of which one is not linked to a further carbon atom is commonly also referred to as a terminal carbon-carbon double bond, i.e. one of said carbon atoms forms a methylene group (=CH₂).

Preferably, the polymer can furthermore comprises repeating units derived from a crosslinking monomer (iii) containing at least two olefinic carbon-carbon double bonds, each of which is formed between two carbon atoms of which one is not linked to a further carbon atom.

Said carboxylic acid (i) preferably has one, two or three carboxylic acid groups and one olefinic carbon-carbon double in α,β-position to a carboxyl group. If more than one carboxylic acid group is present in the molecule, the olefinic carbon-carbon double can be in α,β-position to one or more of said carboxyl groups.

Preferably, the carboxylic acid (i) has 3-6 carbon atoms and, more preferably, is selected from the group consisting of acrylic acid, methacrylic acid, ethacrylic acid, α-chloro-acrylic acid, α-cyano acrylic acid, crotonic acid, α-phenyl acrylic acid, β-acryioxy propionic acid, sorbic acid, α-chloro sorbic acid, angelic acid, cinnamic acid, p-chloro cinnamic acid, β-styryiacrylic acid, itaconic acid, citraconic acid, mesaconic acid, glutaconic acid, aconitic acid, maleic acid, fumaric acid, tricarboxy ethylene, and combinations of these. Of these carboxylic acids, acrylic acid, methacrylic acid, ethacrylic acid, α-chloro-acrylic acid, α-cyano acrylic acid, crotonic acid, β-acryioxy propionic acid, sorbic acid, α-chloro sorbic acid, angelic acid, itaconic acid, citraconic acid, mesaconic acid, glutaconic acid, aconitic acid, maleic acid, fumaric acid, tricarboxy ethylene, and combinations of these are even more preferred. Acrylic acid, methacrylic acid, ethacrylic acid, α-chloro-acrylic acid, α-cyano acrylic acid, β-acryloxy propionic acid are particularly preferred and acrylic acid, methacrylic acid, β-acryioxy propionic acid, and combinations of these are most preferred.

Said carboxylic acid ester (ii) preferably is an ester of formula
R⁶-COO-R⁷, wherein
R⁶ represents a moiety having 2-11 carbon atoms and at least one olefinic carbon-carbon double bond, of which one olefinic carbon-carbon double bond is in α,β-position to the substructure represented by -COO- and/or an olefinic carbon-carbon double bond formed between two carbon atoms of which one is not linked to a further carbon atom, and R⁷ represents an alkyl group having 1-30 carbon atoms.

Preferably, R⁶ represents a moiety having 2-5 carbon atoms, such as a moiety having 2, 3 or 4 carbon atoms. Preferably in a similar manner, R⁷ represents an alkyl group having 6-30 carbon atoms, more preferably an alkyl group having 10-22 carbon atoms or even more preferably an alkyl group having 12-18 carbon atoms.

Thus, the carboxylic acid ester (ii) can be an ester of a carboxylic acid selected from the group consisting of acrylic acid, methacrylic acid, ethacrylic acid, α-chloro-acrylic acid, α-cyano acrylic acid, and combinations of these, preferably an ester of a carboxylic acid selected from the group consisting of acrylic acid, methacrylic acid, and combinations of these. The carboxylic acid ester (ii) can be an ester of an alcohol selected from the group consisting of n-decanol, iso-decanol, n-dodecanol, n-tetradecanol, n-hexadecanol, n-octadecanol, and combinations of these.

The crosslinking monomer (iii) can be a hydrocarbon having 4-18 carbon atoms, such as a hydrocarbon selected from the group consisting of butadiene, isoprene, 1,4-pentadiene, divinylbenzene, divinylnaphthalene, and combinations of these.

In alternative embodiments, the crosslinking monomer (iii) has 4-21 carbon atoms and, optionally, 1-11 heteroatoms, such as 1 heteroatom or 2-10 heteroatoms, preferably 2-7 heteroatoms or 2-5 heteroatoms. Thus, wherein the crosslinking monomer (iii) can be a polyallylether obtained from a polyhydric alcohol containing at least two carbon atoms and having at least two hydroxyl groups by etherification of at least two hydroxyl groups using an allylating agent. In these alternative embodiments, the crosslinking monomer (iii) can comprise 2-11 oxygen atoms, such as 2-10 oxygen atoms, 2-7 oxygen atoms, or 2-5 oxygen atoms. Preferably, said polyhydric alcohol has 2, 3, or 4 hydroxyl groups. In these alternative embodiments, the crosslinking monomer can be a polyallylether having 2, 3, or 4 allyl groups. The polyhydric alcohol can have 2, 3, 4, 5 or 6 carbon atoms and can preferably be selected from ethane diol, diethylene glycol, triethylene glycol, glycerine, trimethylol ethane, trimethylol propane, pentaerythritol, 1,6-hexanediol, triethylene glycol, sucrose, and combinations of these.

Thus, the crosslinking monomer can be a polyallylether selected from diallyl ether, dimethallyl ether, ethane diol diallyl ether, glycerine diallyl ether, glycerine triallyl ether, trimethylol ethane diallyl ether, trimethylol ethane triallyl ether, trimethylol propane diallyl ether, trimethylol propane triallyl ether, diethylene glycol diallyl ether, triethylene glycol diallyl ether, pentaerythritol diallyl ether, pentaerythritol triallyl ether, pentaerythritol tetra allyl ether, 1,6-hexanediol diallyl ether, triethylene glycol diallyl ether, sucrose diallyl ether, sucrose triallyl ether, and combinations of these.

In further alternative embodiments, the crosslinking monomer (iii) is an ester compound obtained from a polyhydric alcohol containing at least two carbon atoms and having at least two hydroxyl groups by esterification of at least two hydroxyl groups using an acylating agent suitable for forming a group R⁸-COO- by reacting with one of said hydroxyl groups, wherein R⁸ has the same meaning as R⁶ as described in the preceding paragraphs. The polyhydric alcohol has 2-12 carbon atoms and, optionally, 1-11 heteroatoms, such as 2-11 oxygen atoms, 2-7 oxygen atoms, or 2-5 oxygen atoms. For instance, the polyhydric alcohol has 2, 3, or 4 hydroxyl groups. Thus, the polyhydric alcohol can be selected from the group consisting of ethane diol, diethylene glycol, triethylene glycol, glycerine, trimethylol ethane, trimethylol propane, pentaerythritol, 1,6-hexanediol, triethylene glycol, sucrose, and combinations of these. The acylating agent suitable for forming an ester of a carboxylic acid can be selected from the group consisting of acrylic acid, methacrylic acid, ethacrylic acid, α-chloro-acrylic acid, α-cyano acrylic acid, and combinations of these; preferably, the acylating agent suitable for forming an ester of a carboxylic acid is selected from acrylic acid, methacrylic acid, and combinations of these. Thus, the crosslinking monomer (iii) can be selected from ethane diol diacryl ester, glycerine diacryl ester, glycerine triacryl ester, trimethylol ethane diacryl ester, trimethylol ethane triacryl ester, trimethylol propane diacryl ester, trimethylol propane triacryl ester, diethylene glycol diacryl ester, triethylene glycol diacryl ester, pentaerythritol diacryl ester, pentaerythritol triacryl ester, pentaerythritol tetraacryl ester, 1,6-hexanediol diacryl ester, triethylene glycol diacryl ester, sucrose diacryl ester, sucrose triacryl ester, ethane diol dimethacryl ester, glycerine dimethacryl ester, glycerine trimethacryl ester, trimethylol ethane dimethacryl ester, trimethylol ethane trimethacryl ester, trimethylol propane dimethacryl ester, trimethylol propane trimethacryl ester, diethylene glycol dimethacryl ester, triethylene glycol dimethacryl ester, pentaerythritol dimethacryl ester, pentaerythritol trimethacryl ester, pentaerythritol tetramethacryl ester, 1,6-hexanediol dimethacryl ester, triethylene glycol dimethacryl ester, sucrose dimethacryl ester, sucrose trimethacryl ester, and combinations of these.

In still further alternative embodiments, the crosslinking monomer (iii) can be selected from the group consisting of N-allyl acrylamide, N-allyl methacrylamide, and tetravinyl silane.

The thickener thus can be a polymer that is obtained from a monomer mixture comprising 50-99 % by weight of said carboxylic acid (i), and 1-50 % by weight of said carboxylic acid ester (ii). Preferably, the polymer is obtained from a monomer mixture comprising 50-95 % by weight of said carboxylic acid (i), and 5-50 % by weight of said carboxylic acid ester (ii). When the monomer mixture said crosslinking monomer (iii), the monomer mixture can comprise 60-99 % by weight of said carboxylic acid (i), 0.5-39.9 % by weight of said carboxylic acid ester (ii), and 0.1-6.0 % by weight of said crosslinking monomer (iii). In preferred embodiments, the monomer mixture can comprise 70-99 % by weight of said carboxylic acid (i), 1-29.9 % by weight of said carboxylic acid ester (ii), and 0.1-1 % by weight of said crosslinking monomer (iii). More preferably, the monomer mixture can comprise 95.9-98.8 % by weight of said carboxylic acid (i), 1-3.5 % by weight of said carboxylic acid ester (ii), and 0.1-0.6 % by weight of said crosslinking monomer (iii). Even more preferably, the monomer mixture can comprise 96-97.9 % by weight of said carboxylic acid (i), 1-3.5 % by weight of said carboxylic acid ester (ii), and 0.1-0.6 % by weight of said crosslinking monomer (iii). Still more preferably, the monomer mixture can comprise 96-97.9 % by weight of said carboxylic acid (i), 2-3.5 % by weight of said carboxylic acid ester (ii), and 0.2-0.5 % by weight of said crosslinking monomer (iii).

Thickeners suitable for being used in the present invention are disclosed in US 4,509,949 and US 3,915,921, for instance. By using a suitable amount of the thickener, the viscosity of the discharge printing agent is set to a range of 2500-150000 mPa s, preferably 3000-15000 mPa s, more preferably 4000-12000. In alternative preferred embodiments, the viscosity can be set to a range of 25000-50000 mPa·s or 25000-45000 mPa s. The viscosity is measured using a Brookfield Viscometer DV-II at 20 °C according to a method that is commonly known to the skilled person and also described in the examples section hereinbelow.

A viscosity within these ranges can usually be accomplished when the the thickener (b) is contained in an amount of 0.1-5.0 % by weight, preferably 1.0-4.0 % by weight, or 2.0-3.5 % by weight, relative to the total weight the discharge printing agent.

### (c) Odour control agent

The odour control agent of the discharge printing agent is believed to scavenge products of the discharge reaction, such as products resulting from the action of said sulfinic acid of formula (I). Thus, the development of malodors is prevented. As a result, no step of washing a fabric treated with discharge printing agent of the present invention is required before the fabric can be further processed or even be delivered to a retailing entity or a consumer.

The odour control agent is a water-dispersible organic compound having at least one functional group selected from an isocyanate group (-N=C=O), an isocyanate precursor group, and a carboxylic acid hydrazide group, or a combination of such organic compounds. In preferred embodiments, the odour control agent is an organic compound of formula Q-(NCO)ₘ,
wherein m is a value in the range of 1 to 6, preferably 2 to 6, and
Q is an m-valent aliphatic, cycloaliphatic , heterocyclic or aromatic moiety.

For instance, the organic compound of formula Q-(NCO)ₘ is a compound selected from tolylene 2,4-diisocyanate, tolylene 2,6-diisocyanate, a mixture of these isomers (TDI), diphenylmethane 4,4'-diisocyanate, diphenylmethane 2,4'-diisocyanate or diphenylmethane 2,2'-diisocyanate, a mixture of these isomers (MDI), phenylene 1,3-diisocyanate or phenylene 1,4-diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), dianisidine diisocyanate (DADI), ethylene 1,2-diisocyanate, propylene 1,2-diisocyanate, tetramethylene 1,4-diisocyanate, 2-methylpentamethylene 1,5-diisocyanate, hexamethylene 1,6-diisocyanate (HDI), 2,2,4-trimethylhexamethylene 1,6-diisocyanate, 2,4,4-trimethylhexamethylene 1,6-diisocyanate, a mixture of these isomers (TMDI), decamethylene 1,10-diisocyanate, dodecamethylene 1,12-diisocyanate, cyclohexane 1,3-diisocyanate, cyclohexane 1,4-diisocyanate, 1-methyl-2,4-diisocyanatocyclohexane, 1-methyl-2,6-diisocyanatocyclohexane, a mixture of these isomers (HTDI or H6TDI), 1-isocyanato-3,3,5-trimethyl-5-isocyanatomethylcyclohexane (isophorone diisocyanate or IPDI), perhydro(diphenylmethane) 2,4'-diisocyanate, perhydro(diphenylmethane) 4,4'-diisocyanate (HMDI or H12MDI), 1,4-diisocyanato-2,2,6-trimethylcyclohexane (TMCDI), 1,3-bis(isocyanatomethyl)cyclohexane, 1,4-bis(isocyanatomethyl)cyclohexane, m-xylylene diisocyanate (m-XDI), p-xylylene diisocyanate (p-XDI), m-tetramethylxylylene 1,3-diisocyanate, m-tetramethylxylylene 1,4-diisocyanate, (m-TMXDI), p-tetramethylxylylene 1,3-diisocyanate, p-tetramethylxylylene 1,4-diisocyanate (p-TMXDI), bis(1-isocyanato-1-methylethyl)naphthalene and mixtures thereof. The organic compound of formula Q-(NCO)ₘ can also be a compound obtained by reaction of a molar excess amount, relative to the molar amount of isocyanate groups, of any one of these aforementioned exemplary compounds with water or a polyol having a molecular weight of 400 or less.

Thus, the organic compound of formula Q-(NCO)ₘ can be obtained by reaction of a molar excess amount, relative to the molar amount of isocyanate groups, of any one of these aforementioned exemplary compounds with a polyol selected from ethyleneglycol, propyleneglycol, 1,3-butylene glycol, 1,4-butylene glycol, neopentyl glycol, diethylene glycol, triethylene glycol, 2,2,4-trimethyl-1,3-pentane diol, hexamethylene glycol, cyclohexane dimethanol, hydrogenated bisphenol-A, trimethylol propane, trimethylol ethane, 1,2,6-hexane triol, glycerine, sorbitol, pentaerythritol, reaction products of the aforementioned polyols with ethylene oxide, propylene oxide or mixtures thereof which reaction products have a weight-averaged molecular weight of 2000 g/mol or less, and combinations or these.

In other preferred embodiments, the odour control agent is an organic compounds having at least one isocyanate precursor group, wherein said isocyanate precursor group is a blocked isocyanate group, which can for instance be selected from allophanate groups, uretdione groups, isocyanurate groups, or is the product obtained from an addition reaction between an isocyanate group and a functional group selected from a primary, secondary or tertiary alcohol group, a secondary amine group, an oxime group, a lactam group, a phenolic hydroxyl group, an N-alkylamide group, an imide group, the carbon atom bonded to an acidic hydrogen atom in a C-H acidic compound.

Thus, the blocked isocyanate group can be the product obtained from an addition reaction between an isocyanate group and a compound selected from ethanol, isopropanol, tert-butanol, benzyl alcohol, lactic acid C1-C4 alkyl esters, tetrahydrofuryl alcohol, N-hydroxyethyl succinimide, di-n-butylamine, N-methyl-tert-butylamin, diisopropylamine, N-isopropyl-tert-butylamine, N-ethylisopropylamine, 2,2,6,6-tetramethylpiperidine, N-isoproyl-ter-butylamine, N-(tert-butyl)benzylamine, dicyclohexylamine, N-ethylisoproylamine, 4,4,-dimethyloxazolidin, N-isopropyl-tert-butylamine, phenol, o-methylphenol, alkyl esters of salicylic acid, ε-caprolactam, δ-valerolactam, γ-butyrolactam, formaldoxime, acetaldoxime, acetonoxim, 2-butanonoxime, 2-pentanonoxime cyclohexanone oxime, acetophenone oxime, benzophenone oxime, N,N-diethylhydroxylamin, diethyl glyoxime, N-methylacetamide, phthalimide, imidazole, pyrazole, 3-methylpyrazole, 4-nitro-3,5-dimethylpyrazole and 4-bromo-3,5-dimethylpyrazole, 3,5-dimethylpyrazol, triazole, 2-isoproyl-1H-imidazol, malonic acid C1-C4 alkyl esters, diethylmalonate, acetoacetic acid C1-C4 alkyl esters, acetylacetone.

Preferably, the blocked isocyanate group is the product obtained from an addition reaction between an isocyanate group and a compound selected from 3,5-dimethylpyrazol and 2-butanonoxime.

In other preferred embodiments, the odour control agent is a carboxylic acid hydrazide having 1-4 hydrazide groups in its molecular structure. The carboxylic acid hydrazide preferably is a hydrazide of an aliphatic monocarboxylic acid having 2-12 carbon atoms or a dihydrazide of an aliphatic dicarboxylic acid having 2-12 carbon atoms. For instance, the carboxylic acid hydrazide is selected from form hydrazide, acetohydrazide, propionic acid hydrazide, butanoic acid hydrazide, pentanoic acid hydrazide, benzoic acid hydrazide, salicylic acid hydrazide, naphthoic acid hydrazide, oxalic acid dihydrazide, carbodihydrazide, glutaric acid dihydrazide, succinic acid dihydrazide, adipic acid dihydrazide, dodecanedioic acid dihydrazide, fumaric acid dihydrazide, maleic acid dihydrazide, terephthalic acid dihydrazide, azelaic acid dihydrazide, sebacic acid dihydrazide, dodecanoic acid dihydrazide, tartaric acid dihydrazide, malic acid dihydrazide, isophthalic acid dihydrazide, dimer acid dihydrazide, citric acid trihydrazide, 1,2,4-benzenetricarboxylic acid dihydrazide, and a combination of these. A particularly preferred carboxylic acid hydrazide is adipic acid dihydrazide.

The amount of odour control agent present in the discharge printing agent can be suitably adapted by the skilled person taking into account the desired level of odour control and, furthermore, the desired wash fastness of the printed fabric. Since the odour control agent contains at least two moieties reactive under the conditions of heating the discharge printing agent applied to a fabric to a temperature of 100 °C or more, the odour control agent can form an oligomeric or polymeric material which adheres to the fabric and thus contributes to adhering any colouring agents optionally present in the discharge printing agent. Typically, the odour control agent (c) is preferably contained in an amount of 5-60 % by weight relative to the weight of the sulfinic acid compound of formula (I), more preferably 10-50 % by weight, even more preferably 20-40 % by weight.

Odour control agent suitable for being used in the present invention are known to the skilled person, for instance from US 5,693,737 A, EP 0 159 117 A1, EP 1 167 477 A1,
EP 3 045 224 A1, or EP 1 900 788 A1, in which documents suitable odour control agents are described. Exemplary odour control agents that are commercially available are also mentioned in the Examples section hereinbelow.

### (d) Water

There are no specific requirements to be fulfilled by the water present in the discharge printing agent and hence ordinary tap water could be used. However, it is preferred to reduce the ion content of the water, for instance by distillation or an ion-exchange treatment. That is, the water preferably is distilled or deionized water.

### (e) Colouring agent

As an optional component, the discharge printing agent can contain a colouring agent, i.e. an agent suitable for imparting the impression of colour on the printed fabric. The colouring agent should be chemically stable in the discharge printing agent, which implies that the colouring agent should be chemically stable in the presence of the reducing agent that is contained in the discharge printing agent. This includes that the colouring agent should be chemically stable in the discharge printing agent not only at room temperature, but also at a temperature of 100 °C or more and, preferably, at a temperature of 200 °C, i.e. the temperature to which the discharge printing agent is exposed after having been applied to the fabric to be printed.

The colouring agent can for instance be a pigment or a dyestuff. From the viewpoint of chemical stability dyestuffs that do not contain an azo group, an anthraquinone substructure, a phthalocyanine substructure, a formazane substructure, or a dioxazine substructure are preferred.

The colouring agent can be a pigment such as a white pigment, for instance titanium dioxide. The colouring agent can also have a colour other than white and, preferably, a colour other than black. For instance, the colouring agent can have a yellow, red, green, blue, or purple colour. It is likewise possible that the discharge printing agent comprises a combination of two or more colouring agents, which combination of two or more colouring agents can in some embodiments comprise a white pigment, which white pigment can for instance be titanium dioxide. The combination of two or more colouring agents can in some embodiments comprise a colouring agent having a yellow, red, green, blue, or purple colour.

In general, the colouring agent is preferably present in discharge printing agent in an amount of 1-10 % by weight, more preferably 2-8 % by weight, relative to the total weight of the discharge printing agent. When a white pigment is present, either as the only colouring agent or in combination with at least one other colouring agent, the white pigment can be contained in an amount of 1-30 % by weight relative to the total weight of the discharge printing agent, preferably 2-20 % by weight, more preferably 3-15 % by weight.

The discharge printing agent can furthermore comprise one or more of a humectant, a defoamer, a pH regulator, an emulsifier, and a catalyst. the humectant can for instance be urea and/or glycerol. The catalyst can for instance be a zinc salt of a carboxylic acid or a hydrated form of such a zinc salt, such as zinc citrate, zinc acetate or a hydrated form of these.

### Aspect (2): Precursor composition

In a second aspect, the present invention provides precursor composition for a discharge printing agent according to the first aspect of the invention as described hereinabove, said precursor composition comprising
(a) a sulfinic acid compound of formula (I) as described with respect to the first aspect of the invention,
   and at least one of
(b) a thickener as described with respect to the first aspect of the invention; and
(c) an odour control agent as described with respect to the first aspect of the invention.

In preferred embodiments, the precursor composition is characterized by means of the following features. Preferred embodiments of the components contained in the precursor composition also become apparent from the description of preferred embodiments of the discharge printing agent according to first aspect of the invention as described hereinabove.

In preferred embodiments, the precursor composition comprises (b) said thickener and (c) said odour control agent.

When the precursor composition comprises said sulfinic acid compound of formula (I) and said odour control agent, the odour control agent (c) is preferably contained in an amount of 5-60 % by weight relative to the weight of the sulfinic acid compound of formula (I), more preferably 10-50 % by weight, even more preferably 20-40 % by weight.

When the precursor composition comprises said thickener, it is preferred that the thickener is present in an amount such that a viscosity of 2500-150000 mPa·s (more preferably 3000-15000 mPa·s, even more preferably 4000-12000 mPa s) results after the precursor composition was dispersed in water in such an amount that said sulfinic acid compound of formula (I) represents 0.5-15 % by weight relative to total weight of the precursor composition and the water. In alternative preferred embodiments, the thickener is present in an amount such that a viscosity of 25000-50000 mPa·s (more preferably 25000-45000 mPa s) results after the precursor composition was dispersed in water in such an amount that said sulfinic acid compound of formula (I) represents 0.5-15 % by weight relative to total weight of the precursor composition and the water. In more preferred embodiments, the thickener is present in an amount such that a viscosity of 2500-150000 mPa·s (more preferably 3000-15000 mPa s, even more preferably 4000-12000 mPa s) results after the precursor composition was dispersed in water in such an amount that said sulfinic acid compound of formula (I) represents 1.0-12 % by weight relative to total weight of the precursor composition and the water. In alternative more preferred embodiments, the thickener is present in an amount such that a viscosity of 25000-50000 mPa·s (more preferably 25000-45000 mPa·s) results after the precursor composition was dispersed in water in such an amount that said sulfinic acid compound of formula (I) represents 2.0-10 % by weight relative to total weight of the precursor composition and the water. It is preferred to measure the viscosity using a Brookfield Viscometer DV-II at 20 °C.

### Aspect (3): Method of preparing a discharge printing agent

In a third aspect, the present invention provides a method of preparing a discharge printing agent according to the first aspect of the invention as described hereinabove, said method comprising a step of blending
(a) a sulfinic acid compound of formula (I) as described with respect to the first aspect of the invention,
(b) a thickener as described with respect to the first aspect of the invention,
(c) an odour control agent as described with respect to the first aspect of the invention, and
(d) water.

The amounts and/or properties of each of these components becomes apparent from the description of the discharge printing agent according to the first aspect of the invention.

The viscosity of the discharge printing agent obtained from this method generally is in the range of 2500-150000 mPa s.

In preferred embodiments, the precursor composition according to the second aspect of the invention as described hereinabove is used in order to provide
(a) said sulfinic acid compound of formula (I),
   and at least one of
(b) said thickener, and
(c) said odour control agent.

### Aspect (4): Discharge printing process

In a fourth aspect, the present invention provides a discharge printing process comprising the steps of
(A) applying a discharge printing agent according to the first aspect of the invention as described hereinabove to a fabric dyed with a dischargeable dye in order to form a pattern of said discharge printing agent on said dyed fabric so as to give a dyed fabric comprising an undeveloped pattern;
(B) exposing the undeveloped pattern on the dyed fabric to a temperature of 100 °C or more at a pressure that is equal to or higher than the pressure of the surrounding atmosphere so as to form a developed pattern on said dyed fabric;
wherein the steps are carried out in the sequence (A) to (B) and wherein further steps can optionally be present between these steps (A) and (B).

The preferred embodiments of said discharge printing agent used in step (A), inter alia such as amounts and/or properties of each of the components of said discharge printing agent, become apparent from the corresponding description of the first aspect of the invention.

In preferred embodiments, said dischargeable dye is a dye containing at least one of an azo group, an anthraquinone substructure, a phthalocyanine substructure, a formazane substructure, and a dioxazine substructure.

In some preferred embodiments, a step (A1) is carried out after said step (A) and before said step (B), which step (A1) is a step of allowing the water from the discharge printing agent present in said undeveloped pattern to evaporate at least partially.

Said step (B) preferably comprises exposing the undeveloped pattern on the dyed fabric to at least one of steam, hot air, and infrared irradiation, wherein it is more preferred to combine the exposure to infrared irradiation with the exposure to hot air. Exposure to the infrared irradiation is preferably carried out by using electromagnetic irradiation having a wavelength in the range of 700 nm to 1 mm.

The undeveloped pattern on the dyed fabric is preferably exposed in step (B) to a temperature of 200 °C or less, more preferably 180 °C or less, even more preferably 160 °C or less. In all these embodiments of the discharge printing process, it preferred that said step (B) is carried out for a period of 1-6 minutes.

### Aspect (5): Fabric comprising a printed pattern

In a fifth aspect, the present invention provides a dyed fabric comprising a pattern obtainable by a discharge printing process according to the fourth aspect of the invention as described hereinabove.

### Examples

In the following, the present invention is illustrated by means of the following examples and comparative examples.

### General method for preparing discharge printing agents

A discharge printing agent was prepared by combining the constituents in a dissolver of type Dispermat^{®} CN (commercially available from VMA-Getzmann GmbH, 51580 Reichshof, Germany) which was equipped with a toothed disc having a diameter of 50 mm. Blending was carried out a 1000 to 2000 rpm until a uniform mixture had formed. This usually took about 30 minutes. The pH was adjusted to 9 by adding pH regulators.

Subsequently, the discharge printing agent was stored at room temperature in a jar sealed with a screw cap for testing and evaluation.

The constituents and the respective amount (indicated in parts by weight) are shown in the tables 1 and 2. The constitution of the compositions referred as "Adjuvants A" and "Adjuvants B" are described in the table 3 and 4.

**Table 1: Constitution of discharge printing agents (amounts in parts by weight)**

| | Comparative example 1 | Comparative example 2 | Comparative example 3 | Comparative example 4 |
|---|---|---|---|---|
| Adjuvants A | 392.0 | 392.0 | 392.0 | 392.0 |
| Thickener 1 | 48.0 | 48.0 | 48.0 | 48.0 |
| Thickener 2 | 4.0 | 4.0 | 4.0 | 4.0 |
| Reducing agent 1 | - | 100.0 | - | - |
| Reducing agent 2 | - | - | 100.0 | - |
| Reducing agent 3 | - | - | - | 100.0 |
| Dispersant (= H₂O) | 514.0 | 514.0 | 514.0 | 514.0 |
| Total | 958.0 | 1058.0 | 1058.0 | 1058.0 |

In the discharge printing agent of comparative examples 1-4, Thickener 1 was added in an amount sufficient to impart a viscosity of 25000 mPa·s. Then, Thickener 2 was added in an amount sufficient to increase the viscosity to about 43000 mPa·s.

**Table 2: Constitution of discharge printing agents (amounts in parts by weight)**

| | Comparative example 5 | Example 1 | Example 2 | Example 3 |
|---|---|---|---|---|
| Adjuvants B | 257.6 | 257.6 | 257.6 | 257.6 |
| Pigment suspension | 100.0 | 100.0 | 100.0 | 100.0 |
| Thickener 2 | 36.2 | 40.6 | 34.6 | 37.8 |
| Odour control agent 1 | - | 100.0 | - | - |
| Odour control agent 2 | - | - | 100.0 | - |
| Odour control agent 3 | - | - | - | 25.0 |
| Reducing agent 1 | 100.0 | 100.0 | 100.0 | 100.0 |
| Dispersant (= H₂O) | 606.2 | 601.8 | 607.8 | 604.6 |
| total | 1100.0 | 1200.0 | 1200.0 | 1125.0 |

**Table 3: Adjuvants A (amounts in parts by weight)**

| | |
|---|---|
| Humectant 1 | 200.0 |
| Defoamer 1 | 1.0 |
| Emulsifier | 5.0 |
| Binder, acrylic dispersion | 90.0 |
| Catalyst for the reduction step | 10.0 |
| pH Regulator 2 | 10.0 |
| Humectant 2 | 70.0 |
| pH Regulator 1 | 6.0 |
| total | 392.0 |

**Table 4: Adjuvants B (amounts in parts by weight)**

| | |
|---|---|
| Humectant 1 | 50.0 |
| Defoamer 2 | 1.0 |
| Emulsifier | 5.0 |
| Wax emulsion | 100.0 |
| Adipate-based plasticizer | 30.0 |
| Humectant 2 | 70.0 |
| pH Regulator 1 | 1.6 |
| total | 257.6 |

**Table 5: Components used in the compositions of the examples and comparative examples (commercially available at CHT Germany GmbH, 72072 Tübingen, Germany, unless indicated otherwise).**

| Component | |
|---|---|
| Thickener 1 | Aqueous solution of hydroxyethyl cellulose (Prisulon CM 70) (solids content: 10 %) |
| Thickener 2 | Acrylic polymer in aqueous dispersion (TUBIVIS DRL 170) (solids content: 50 %) |
| Reducing agent 1 | 2-hydroxy-2-sulfinatoacetic acid disodium salt (solids content: 99 %) |
| Reducing agent 2 | Thiourea dioxide (Redulit F) (solids content: 99 % ) |
| Reducing agent 3 | Zinc bis(hydroxymethanesulphinate) (TUBISCREEN DC-AGENT) (solids content: 99 %) |
| Odour control agent 1 | Aqueous dispersion of dimethylpyrazol-blocked isocyanate (TUBICOAT FIX H25) (solids content: 38 %) |
| Odour control agent 2 | Aqueous dispersion of a butanon oxime-blocked isocyanate (TUBIFIX P 70) (solids content: 45 %) |
| Odour control agent 3 | Adipic acid dihydrazide (solids content: 99 %) |
| Humectant 1 | Aqueous urea solution 40 % (solids content: 40 %) |
| Humectant 2 | Glycerine (solids content: 99 %) |
| Defoamer 1 | Silicone emulsion (TUBASSIST AF 237 W) (solids content: 32 %) |
| Defoamer 2 | Mixture of organomodified polysiloxanes, fatty acids and polyglycol (Hansa ADD 5410) (solids content: 99%) |
| pH Regulator 1 | aqueous ammonia solution (25%) |
| pH Regulator 2 | Aqueous solution of diammonium hydrogen ortho-phosphate (solids content: 66%) |
| Pigment suspension | Titanium dioxide suspension (TUBIPRINT WEISS K 90) (solids content: 60 %) |
| Emulsifier | Aryl ethylphenyl polyglycol ether (HANSA CARE A 60) (solids content: 32 %) |
| Binder, acrylic dispersion | Acrylic polymer in aqueous dispersion (TUBICOAT A 12 E) (solids content: 60 %) |
| Catalyst for reduction step | Zinkcitrate x 2 H₂O (solids content: 95 %) |
| Wax emulsion | Polyethylene dispersion (HANSA LPW 465) (solids content: 30 %) |
| Adipate-based plasticizer | Adipate-based plasticizer Bis(2-ethylhexyl) adipate (TUBISOFT VST) (solids content: 99 %) |

| | |
|---|---|
| Solids content was determined by drying at 105 °C. | |

### General method of printing using the exemplary discharge printing agents

Printing was tested using a knitted cotton fabric dyed black in a screen printing method which was carried out using a magnetic printing table of type MBK FAM C 27 (commercially available from mbk Maschinenbau GmbH, 88353 Kisslegg, Germany) with the following settings.
Squeegee speed: 6 m/min
Squeegee roll diameter: 10 mm
Squeegee pressure: 6 (setting on a scale ranging from 1 to 6, without units)
Stencil gauze: 43T
Stencil motif: A4
Number of squeegee passes: 1

Fixation of the printed pattern was effected by dry heating to a temperature of 160 °C for 4 minutes at a fan speed of 2220 rpm using a labcoater of type Mathis LTE (commercially available from Werner Mathis AG, 8156 Oberhasli, Switzerland).

Printing results were evaluated as described hereinbelow.

The printed fabric was also evaluated according to the following procedure for olfactory examination.

### Procedure for olfactory examination of fabric samples

The test for evaluating the efficiency of odour control by the odour control agent contained in the discharge agent printing agent was carried out in the following manner.

30 ml of distilled water are placed in a wide-necked jar having a capacity of 1 litre. The jar is sealed with a screw lid having a metal hook attached to the surface facing towards the interior volume of the jar and the sealed jar is placed in an oven at a temperature of 40 °C for a period of 15 minutes.

As the sample of the printed fabric to be tested is obtained by cutting from the printed fabric a piece having a size of 15 cm x 21 cm. In order to ensure that the test results are reliable and reproducible, it is understood that the piece of 15 cm x 21 cm is cut from the fabric in such a manner that the cut piece consists of printed fabric, i.e. no part of the cut piece of fabric has not been treated with the discharge printing agent to be tested. A hole having a diameter of 6 mm was punched into the each corner of the sample. The sample is folded and attached to the hook of the screw lid of the jar in such a manner that contact of the sample with the water and/or the interior walls of the jar is avoided. The screw lid is put in place onto the jar and screwed down such that the jar is closed tightly.

At the same time, a control sample is prepared by cutting a sample having the same size (15 cm × 21 cm) from unprinted fabric. Hole are punched into the control sample and the control sample is folded and attached to the hook of the screw lid of the jar in the same manner as described for the sample of the printed fabric to be tested. The screw lid is put in place onto the jar and screwed down such that the jar is closed tightly.

The jar holding the sample and the jar holding the control sample are stored in an oven at a temperature of 40 °C over a period of 2 hours. Subsequently, the jars are removed from the oven and allowed to cool to room temperature. This usually takes about 10 minutes.

After the jars have cooled to room temperature, the sample and control sample are removed from the respective jar and handed to a panel of 3 persons. Each person evaluates the odour of each sample according to the following rating scheme as regards its intensity and its characteristics.

| | |
|---|---|
| Rating 1: | not noticeable |
| Rating 2: | perceptible, but not unpleasant |
| Rating 3: | clearly perceptible, but not yet unpleasant |
| Rating 4: | unpleasant |
| Rating 5: | very unpleasant |
| Rating 6: | intolerable |

After the evaluation, each sample is stored in a sealable plastic bag which is sealed for any later testing as suitable or necessary.

### Evaluation of the exemplary discharge printing agents

Viscosity of the discharge printing agent was measured using a Brookfield Viscometer DV-II (commercially available from AMETEK Brookfield, Middleboro, MA 02346, USA) at 20 °C and 20 revolutions per minute using a RV-spindle selected according to the following table on basis of the expected viscosity of the sample. The measured values is read after a measurement period of 30 seconds. If it is found after said measurement period of 30 seconds that a different spindle should have been used because the measured viscosity does not fall within the expected range, the spindle is exchanged accordingly and the measurement is repeated.

| Expected viscosity range [mPa·s] | No. of RV-spindle to be used |
|---|---|
| 4000 - 8000 | 4 |
| 8000 - 16000 | 5 |
| 16000 - 40000 | 6 |
| 40000 - 160000 | 7 |

Viscosity was measured about 4 hours and about 24 hours after preparing the discharge printing agent.

Likewise, pH was measured using a pH-meter of type WTW pH 540 GLP (commercially available from Xylem Inc., Rye Brook, NY 10573) about 4 hours and about 24 hours after preparing the discharge printing agent.

The printing results of the discharge printing agents of examples 1-3 and comparative examples 1-5 were evaluated by carrying out colour measurements in the CIE L*a*b* colour space using a Konica Minolta Spectrophotometer CM 600d (commercially available from Konica Minolta Business Solutions Deutschland GmbH, 30855 Langenhagen, Germany). However, since printing was carried out on black fabric with a discharge printing agent containing titanium dioxide, i.e. a white pigment, only the lightness value L* was recorded. In the CIE L*a*b* colour space, a lightness value L* = 0 represents the darkest black and a lightness value L* = 100 represents the brightest white.

**Table 6: Evaluation of discharge printing agents**

| | t | Comparative example 1 | Comparative example 2 | Comparative example 3 | Comparative example 4 |
|---|---|---|---|---|---|
| pH | 0 | 9.0 | 9.0 | 9.0 | 9.0 |
| | < 4 h | 8.3 | 8.6 | 3.7 | 4.8 |
| | ≈ 24 h | 8.3 | 8.6 | 3.7 | 4.7 |
| Viscosity [mPa·s] | 0 | 43000 | 43000 | 43000 | 43000 |
| | < 4 h | 43800 | 41600 | 29200 | 28800 |
| | ≈ 24 h | 42800 | 41200 | 26400 | 29000 |
| L* (printed fabric) | < 4 h | 17 | 56 | 22 | 64 |
| | ≈ 24 h | 17 | 54 | 21 | 63 |

In comparative examples 1-4, the pH, the viscosity and the printing results were tested less than 4 hours and 24 hours after the discharge printing agent had been prepared as indicated by means of parameter t. That is, testing of the discharge printing agent was carried out at the point of time t, with t = 0 being the time of preparation of the discharge printing agent. For instance, it is indicated in table 6 that the lightness value L* of printed fabric was measured using the discharge printing agent of comparative example 1-4 less than 4 hours after the discharge printing agent had been prepared (t < 4 h) and 24 hours after the discharge printing agent had been prepared (t ≈ 24 h).

It was found that the pH significantly changed in the comparative examples 3 and 4 during storage of the discharge printing agent. While the pH had been set to 9 during preparation of each discharge printing agent, values as low as 3.7 were observed after a storage time of 24 hours. Likewise, the viscosity decreased from 43000 mPa·s to values as low 26400 mPa·s within 24 hours of storage.

The L* value of the black-dyed fabric used in the test for printing was 17, which did not change in comparative example 1. The corresponding discharge printing agent did not contain a reducing agent that could have affected the black dye in the fabric. The L* value of fabric did not significantly increase in comparative example 3, which indicates that the reducing agent used was almost completely ineffective. This is presumably the result of a premature deterioration of the reducing agent which also resulted in an undesirable decrease of the pH and, as a consequence, in a decrease of the viscosity.

Only in comparative example 2 (in which a discharge printing agent containing 2-hydroxy-2-sulfinatoacetic acid disodium salt as the reducing agent was tested), satisfactory stability of pH and viscosity in combination with good brightening effect (as a result of the reduction of the black dye) was observed.

**Table 7: Evaluation of discharge printing agents**

| | | Comparative example 5 | Example 1 | Example 2 | Example 3 |
|---|---|---|---|---|---|
| pH | <4h | 8.9 | 8.9 | 8.8 | 8.9 |
| Viscosity [mPa·s] | <4h | 4260 | 11080 | 4520 | 5350 |
| L* (printed fabric) | ≈ 24 h | 54.5 | 56.7 | 52.3 | 48.2 |
| Olfactory examination | ≈ 24 h | 3-4 | 2 | 2 | 1-2 |

In comparative example 5 and examples 1-3, the pH, the viscosity and the printing results were tested at the time of preparation, less than 4 hours and 24 hours after the discharge printing agent had been prepared as indicated by means of parameter t. No significant change of pH and viscosity were observed.

In comparative example 5, satisfactory stability of pH and viscosity in combination with good brightening effect (as a result of the reduction of the black dye) was observed. However, the olfactory examination of the printed fabric gave unsatisfactory results as an odour could be clearly perceived.

In examples 1-3, satisfactory stability of pH and viscosity in combination with good brightening effect (as a result of the reduction of the black dye) was observed. Likewise, the olfactory examination gave good results. While the highest brightening effect was observed in example 1, the best result of the olfactory examination was observed in example 3.

## Claims

1. Discharge printing agent comprising
(a) a sulfinic acid compound of formula (I)
MO-S(=O)-C(R¹)(R²)(R³) (I)
or a salt thereof, wherein
R¹ is selected from the group consisting of H and NR⁴R⁵;
R² is selected from the group consisting of H, OH, alkyl, alkenyl, cycloalkyl and aryl, wherein the alkyl, alkenyl, cycloalkyl, and aryl group are unsubstituted or substituted with 1, 2 or 3 substituents which are independently selected from alkyl having 1-6 carbon atoms, OH, alkoxy having 1-6 carbon atoms, halogen and CF₃; and
R³ is COOM, SO₃M, COR⁴, CONR⁴R⁵ or COOR₄;
each M is independently selected from the group consisting of H, N(R⁴)₄⁺, a monovalent metal ion or divalent metal ion of the groups Ia, IIa, IIb, IVa or VIIIb of the Periodic Table of the Elements;
wherein each R⁴ and R⁵ is independently selected from the group consisting of H or an alkyl group having 1-6 carbon atoms;
(b) a thickener comprising a polymer having carboxylic acid groups -COOH or carboxylate groups -COO- attached to the polymeric backbone;
(c) an odour control agent, which odour control agent is an organic compound having at least one functional group selected from an isocyanate group (-N=C=O), an isocyanate precursor group, and a carboxylic acid hydrazide group, or a combination of such organic compounds, and
(d) water,
wherein the discharge printing agent has a viscosity of 2500-150000 mPa·s at a temperature of 20 °C.

2. Discharge printing agent according to claim 1, wherein
wherein M is independently selected from the group consisting of H, NH₄⁺, Li⁺, Na⁺, and
K⁺, and/or
R¹ is H, R² is OH, and R³ is COOM.

3. Discharge printing agent according to claim 1 or claim 2, wherein the thickener comprises a polymer having repeating units derived from
(i) a carboxylic acid having at least one carboxylic acid group, 3-12 carbon atoms, and at least one olefinic carbon-carbon double bond, of which one olefinic carbon-carbon double bond is in α,β-position to at least one carboxyl group and/or an olefinic carbon-carbon double bond formed between two carbon atoms of which one is not linked to a further carbon atom, and
(ii) a carboxylic acid ester having 4-42 carbon atoms and at least one olefinic carbon-carbon double bond, of which one olefinic carbon-carbon double bond is in α,β-position to the carboxyl group and/or an olefinic carbon-carbon double bond formed between two carbon atoms of which one is not linked to a further carbon atom,
by polymerization of said olefinic carbon-carbon double bond in α,β-position to one carboxyl group and/or said olefinic carbon-carbon double bond formed between two carbon atoms of which one is not linked to a further carbon atom.

4. Discharge printing agent according to claim 3, wherein the odour control agent is an organic compound having at least one isocyanate precursor group, wherein said isocyanate precursor group is a blocked isocyanate group, which blocked isocyanate group is preferably selected from allophanate groups, uretdione groups, isocyanurate groups, or is the product obtained from an addition reaction between an isocyanate group and a functional group selected from a primary, secondary or tertiary alcohol group, a secondary amine group, an oxime group, a lactam group, a phenolic hydroxyl group, an N-alkylamide group, an imide group, the carbon atom bonded to an acidic hydrogen atom in a C-H acidic compound,
wherein the blocked isocyanate group preferably is the product obtained from an addition reaction between an isocyanate group and a compound selected from 3,5-dimethylpyrazol and 2-butanonoxime.

5. Discharge printing agent according to claim 4, wherein the odour control agent is a carboxylic acid hydrazide having 1-4 hydrazide groups in its molecular structure, wherein the carboxylic acid hydrazide preferably is a hydrazide of an aliphatic monocarboxylic acid having 2-12 carbon atoms or a dihydrazide of an aliphatic dicarboxylic acid having 2-12 carbon atoms.

6. Discharge printing agent according to any one of claims 1-5, further comprising a colouring agent, which preferably is a pigment or a dyestuff, which dyestuff more preferably does not contain an azo group, an anthraquinone substructure, a phthalocyanine substructure, a formazane substructure, or a dioxazine substructure.

7. Precursor composition for a discharge printing agent as defined in any one of claims 1-6, said precursor composition comprising
(a) a sulfinic acid compound of formula (I) as defined in any one of claims 1-6,
and at least one of
(b) a thickener as defined in any one of claims 1-6, and
(c) an odour control agent as defined in any one of claims 1-7.

8. Precursor composition according to claim 7, wherein the precursor composition comprises said thickener in an amount such that a viscosity of 2500-150000 mPa·s at a temperature of 20 °C results after the precursor composition was dispersed in water in such an amount that said sulfinic acid compound of formula (I) represents 0.5-15 % by weight relative to total weight of the precursor composition and the water.

9. Method of preparing a discharge printing agent as defined in any one of claims 1-6, said method comprising a step of blending
(a) said sulfinic acid compound of formula (I) as defined in any one of claims 1-6,
(b) a thickener as defined in any one of claims 1-6,
(c) an odour control agent as defined in any one of claims 1-6, and
(d) water.

10. Method of preparing a discharge printing agent according to claim 9, wherein
(a) said sulfinic acid compound of formula (I),
and at least one of
(b) said thickener, and
(c) said odour control agent
are provided in the form of the precursor composition as defined in claim 7 or claim 8.

11. Discharge printing process comprising the steps of
(A) applying a discharge printing agent as defined in any one of claims 1-6 to a fabric dyed with a dischargeable dye in order to form a pattern of said discharge printing agent on said dyed fabric so as to give a dyed fabric comprising an undeveloped pattern;
(B) exposing the undeveloped pattern on the dyed fabric to a temperature of 100 °C or more at a pressure that is equal to or higher than the pressure of the surrounding atmosphere so as to form a developed pattern on said dyed fabric;
wherein the steps are carried out in the sequence (A) to (B) and wherein further steps can optionally be present between these steps (A) and (B).

12. The discharge printing process according to claim 11, wherein said dischargeable dye is a dye containing at least one of an azo group, an anthraquinone substructure, a phthalocyanine substructure, a formazane substructure, and a dioxazine substructure.

13. The discharge printing process according to claim 11 or claim 12, wherein the undeveloped pattern on the dyed fabric is exposed in step (B) to a temperature of 200 °C or less, preferably 180 °C or less, more preferably 160 °C or less, and/or step (B) is carried out for a period of 1-6 minutes.

14. Dyed fabric comprising a pattern obtainable by a discharge printing process as defined in any one of claims 11-13.

## Patentansprüche

1. Ätzdruckmittel, bestehend aus
(a) einer Sulfinsäureverbindung der Formel (I)
MO-S(=O)-C(R¹)(R²)(R³) (I)
oder einem Salz davon, wobei
R¹ ausgewählt ist aus der Gruppe bestehend aus H und NR⁴R⁵ ;
R² ausgewählt ist aus der Gruppe bestehend aus H, OH, Alkyl, Alkenyl, Cycloalkyl und Aryl,
wobei die Alkyl-, Alkenyl-, Cycloalkyl- und Arylgruppe unsubstituiert oder mit 1, 2 oder 3 Substituenten substituiert ist, die unabhängig voneinander aus Alkyl mit 1-6 Kohlenstoffatomen, OH, Alkoxy mit 1-6 Kohlenstoffatomen, Halogen und CF₃ ausgewählt sind; und
R³ COOM, SO₃M, COR⁴, CONR⁴R⁵ oder COOR⁴ ist;
jedes M unabhängig ausgewählt ist aus der Gruppe bestehend aus H, N(R⁴)₄⁺, einem einwertigen Metallion oder zweiwertigen Metallion der Gruppen la, Ila, IIb, IVa oder Vlllb des Periodensystems der Elemente;
wobei jedes R⁴ und R⁵ unabhängig voneinander aus der Gruppe bestehend aus H oder einer Alkylgruppe mit 1-6 Kohlenstoffatomen ausgewählt ist;
(b) einem Verdickungsmittel, das ein Polymer mit an das polymere Grundgerüst gebundenen Carbonsäuregruppen -COOH oder Carboxylatgruppen -COO- umfasst;
(c) einem Geruchsbekämpfungsmittel, wobei das Geruchsbekämpfungsmittel eine organische Verbindung mit mindestens einer funktionellen Gruppe ist, die aus einer Isocyanatgruppe (-N=C=O), einer Isocyanatvorläufergruppe und einer Carbonsäurehydrazidgruppe oder einer Kombination solcher organischen Verbindungen ausgewählt ist, und
(d) Wasser,
wobei das Ätzdruckmittel eine Viskosität von 2500-150000 mPa·s bei einer Temperatur von 20 °C aufweist.

2. Ätzdruckmittel nach Anspruch 1, wobei
wobei M unabhängig voneinander ausgewählt ist aus der Gruppe bestehend aus H,
NH₄⁺, Li⁺, Na⁺ und K⁺, und/oder
R¹ H ist, R² OH ist, und R³ COOM ist.

3. Ätzdruckmittel nach Anspruch 1 oder Anspruch 2, wobei das Verdickungsmittel ein Polymer umfasst, das sich wiederholende Einheiten aufweist, die sich durch Polymerisation der olefinischen Kohlenstoff-Kohlenstoff-Doppelbindung in α,β-Position zu einer Carboxylgruppe und/oder der olefinischen Kohlenstoff-Kohlenstoff-Doppelbindung, die zwischen zwei Kohlenstoffatomen gebildet wird, von denen eines nicht an ein weiteres Kohlenstoffatom gebunden ist, ableiten von
(i) einer Carbonsäure mit mindestens einer Carbonsäuregruppe, 3-12 Kohlenstoffatomen und mindestens einer olefinischen Kohlenstoff-Kohlenstoff-Doppelbindung, von denen sich eine olefinische Kohlenstoff-Kohlenstoff-Doppelbindung in α,β-Position zu mindestens einer Carboxylgruppe und/oder einer olefinischen Kohlenstoff-Kohlenstoff-Doppelbindung befindet, die zwischen zwei Kohlenstoffatomen gebildet ist, von denen eines nicht mit einem weiteren Kohlenstoffatom verbunden ist, und
(ii) einem Carbonsäureester mit 4-42 Kohlenstoffatomen und mindestens einer olefinischen Kohlenstoff-Kohlenstoff-Doppelbindung, von der sich eine olefinische Kohlenstoff-Kohlenstoff-Doppelbindung in α,β-Position zu der Carboxylgruppe und/oder einer olefinischen Kohlenstoff-Kohlenstoff-Doppelbindung befindet, die zwischen zwei Kohlenstoffatomen gebildet wird, von denen eines nicht mit einem weiteren Kohlenstoffatom verbunden ist.

4. Ätzdruckmittel nach Anspruch 3, wobei das Geruchsbekämpfungsmittel eine organische Verbindung mit mindestens einer Isocyanatvorläufergruppe ist, wobei die Isocyanatvorläufergruppe eine blockierte Isocyanatgruppe ist, wobei die blockierte Isocyanatgruppe vorzugsweise ausgewählt ist aus Allophanatgruppen, Uretdiongruppen, Isocyanuratgruppen, oder das Produkt ist, das durch eine Additionsreaktion zwischen einer Isocyanatgruppe und einer funktionellen Gruppe, ausgewählt aus einer primären, sekundären oder tertiären Alkoholgruppe, einer sekundären Amingruppe, einer Oximgruppe, einer Lactamgruppe, einer phenolischen Hydroxylgruppe, einer N-Alkylamidgruppe, einer Imidgruppe, dem an ein saures Wasserstoffatom gebundenen Kohlenstoffatom in einer C-H-sauren Verbindung, erhalten wird,
wobei die blockierte Isocyanatgruppe vorzugsweise das Produkt ist, das aus einer Additionsreaktion zwischen einer Isocyanatgruppe und einer Verbindung ausgewählt aus 3,5-Dimethylpyrazol und 2-Butanonoxim erhalten wird.

5. Ätzdruckmittel nach Anspruch 4, wobei das Geruchsbekämpfungsmittel ein Carbonsäurehydrazid mit 1-4 Hydrazidgruppen in seiner Molekülstruktur ist, wobei das Carbonsäurehydrazid vorzugsweise ein Hydrazid einer aliphatischen Monocarbonsäure mit 2-12 Kohlenstoffatomen oder ein Dihydrazid einer aliphatischen Dicarbonsäure mit 2-12 Kohlenstoffatomen ist.

6. Ätzdruckmittel nach einem der Ansprüche 1 bis 5, das ferner einen färbendes Mittel enthält, bei dem es sich vorzugsweise um ein Pigment oder einen Farbstoff handelt, wobei der Farbstoff vorzugsweise keine Azogruppe, Anthrachinon-Substruktur, Phthalocyanin-Substruktur, Formazan-Substruktur oder Dioxazin-Substruktur enthält.

7. Vorläuferzusammensetzung für ein Ätzdruckmittel wie in einem der Ansprüche 1-6 definiert, wobei die Vorläuferzusammensetzung
(a) eine Sulfinsäureverbindung der Formel (I), wie in einem der Ansprüche 1-6 definiert, und mindestens eines von
(b) ein Verdickungsmittel nach einem der Ansprüche 1 bis 6, und
(c) ein Geruchsbekämpfungsmittel gemäß einem der Ansprüche 1-7 umfasst.

8. Vorläuferzusammensetzung nach Anspruch 7, wobei die Vorläuferzusammensetzung das Verdickungsmittel in einer solchen Menge umfasst, dass sich eine Viskosität von 2500-150000 mPa·s bei einer Temperatur von 20 °C ergibt, nachdem die Vorläuferzusammensetzung in Wasser in einer solchen Menge dispergiert wurde, dass die Sulfinsäureverbindung der Formel (I) 0,5-15 Gew.-%, bezogen auf das Gesamtgewicht der Vorläuferzusammensetzung und des Wassers, darstellt.

9. Verfahren zur Herstellung eines Ätzdruckmittels wie in einem der Ansprüche 1-6 definiert, wobei das Verfahren einen Schritt des Mischens
(a) der Sulfinsäureverbindung der Formel (I) wie in einem der Ansprüche 1-6 definiert,
(b) ein Verdickungsmittel wie in einem der Ansprüche 1-6 definiert,
(c) ein Geruchsbekämpfungsmittel wie in einem der Ansprüche 1-6 definiert, und
(d) Wasser
umfasst.

10. Verfahren zur Herstellung eines Ätzdruckmittels nach Anspruch 9, wobei
(a) die Sulfinsäureverbindung der Formel (I),
und mindestens eines von
(b) dem Verdickungsmittel, und
(c) dem Geruchsbekämpfungsmittel
in Form der Vorläuferzusammensetzung wie in Anspruch 7 oder 8 definiert bereitgestellt werden.

11. Ätzdruckverfahren umfassend die Schritte
(A) Aufbringen eines Ätzdruckmittels wie in einem der Ansprüche 1-6 definiert auf einen mit einem ätzbaren Farbstoff gefärbten Stoff, um ein Muster des Ätzdruckmittels auf dem gefärbten Stoff zu bilden, um einen gefärbten Stoff zu erhalten, der ein nichtentwickeltes Muster aufweist;
(B) Aussetzen des nicht entwickelten Musters auf dem gefärbten Stoff einer Temperatur von 100 °C oder mehr bei einem Druck, der gleich oder höher ist als der Druck der umgebenden Atmosphäre, um ein entwickeltes Muster auf dem gefärbten Stoff zu bilden;
wobei die Schritte in der Reihenfolge (A) - (B) durchgeführt werden und wobei zwischen diesen Schritten (A) und (B) optional weitere Schritte vorhanden sein können.

12. Ätzdruckverfahren nach Anspruch 11, wobei der ätzbare Farbstoff ein Farbstoff ist, der mindestens eine Azogruppe, eine Anthrachinon-Substruktur, eine Phthalocyanin-Substruktur, eine Formazan-Substruktur oder eine Dioxazin-Substruktur enthält.

13. Ätzdruckverfahren nach Anspruch 11 oder Anspruch 12, wobei das nicht entwickelte Muster auf dem gefärbten Stoff in Schritt (B) einer Temperatur von 200 °C oder weniger, vorzugsweise 180 °C oder weniger, weiter bevorzugt 160 °C oder weniger, ausgesetzt wird und/oder Schritt (B) für einen Zeitraum von 1-6 Minuten durchgeführt wird.

14. Gefärbter Stoff umfassend ein Muster, das durch ein Ätzdruckverfahren wie in einem der Ansprüche 11-13 erhältlich ist.

## Revendications

1. Agent d'impression de décharge comprenant
(a) un composé acide sulfinique de formule (I)
MO-S(O)-C(R¹)(R²)(R³) (I)
ou un de ses sels, où
R¹ est choisi dans le groupe constitué par H et un groupe NR⁴R⁵ ;
R² est choisi dans le groupe constitué par H, un groupe OH, alkyle, alcényle, cycloalkyle et aryle, dans leque les groupes alkyle, alcényle, cycloalkyle et aryle sont non substitués ou substitués avec 1, 2 ou 3 substituants qui sont choisis indépendamment parmi un groupe alkyle ayant 1 à 6 atomes de carbone, OH, alcoxy ayant 1 à 6 atomes de carbone, halogène et CF3 ; et
R³ est un groupe COOM, SO³M, COR⁴, CONR⁴R⁵ ou COOR⁴ ;
chaque M est choisi indépendamment dans le groupe constitué par H, un groupe N(R⁴)₄⁺, un ion métallique monovalent ou un groupe métallique divalent des groupes Ia, IIa, IIb, IVa ou VIIIb du tableau périodique des éléments ;
chaque R⁴ et R⁵ étant choisi indépendamment dans le groupe constitué par H ou un groupe alkyle ayant 1 à 6 atomes de carbone ;
(b) un épaississant comprenant un polymère ayant des groupes d'acide carboxylique -COOH ou des groupes carboxylate -COO- attachés au squelette polymère ;
(c) un agent de contrôle d'odeur, lequel agent de contrôle d'odeur est un composé organique ayant au moins un groupe fonctionnel choisi parmi un groupe isocyanate (-N=C=O), un groupe précurseur d'isocyanate et un groupe acide carboxylique hydrazide ou une combinaison de ces composés organiques et
(d) de l'eau,
dans lequel l'agent d'impression de décharge a une viscosité de 2 500 à 150 000 mPa·s à une température de 20 °C.

2. Agent d'impression de décharge selon la revendication 1, dans lequel
M est choisi indépendamment dans le groupe constitué par H, NH₄⁺, Li⁺, Na⁺, et K⁺, et/ou
R¹ est H, R² est un groupe OH, et R³ est un groupe COOM.

3. Agent d'impression de décharge selon la revendication 1 ou la revendication 2, dans lequel l'épaississant comprend un polymère ayant des motifs de répétition dérivés de
(i) un acide carboxylique ayant au moins un groupe acide carboxylique, 3 à 12 atomes de carbone et au moins une double liaison carbone-carbone oléfinique, dont une double liaison carbone-carbone oléfinique est en position α,β à au moins un groupe carboxyle et/ou une double liaison carbone-carbone oléfinique formée entre deux atomes de carbone dont un n'est pas lié à un autre atome de carbone et
(ii) un ester d'acide carboxylique ayant 4 à 42 atomes de carbone et au moins une double liaison carbone-carbone oléfinique, dont une double liaison carbone-carbone oléfinique est en position α,β à au moins un groupe carboxyle et/ou une double liaison carbone-carbone oléfinique formée entre deux atomes de carbone dont un n'est pas lié à un autre atome de carbone,
par polymérisation de ladite double liaison carbone-carbone oléfinique en position position α,β à un groupe carboxyle et/ou ladite double liaison carbone-carbone oléfinique formée entre deux atomes de carbone dont un n'est pas lié à un autre atome de carbone.

4. Agent d'impression de décharge selon la revendication 3, dans lequel l'agent de contrôle d'odeur est un composé organique ayant au moins un groupe précurseur d'isocyanate, dans lequel ledit groupe précurseur d'isocyanate est un groupe isocyanate bloqué, lequel groupe isocyanate bloqué est de préférence choisi parmi des groupes allophanate, des groupes uretdione, des groupes isocyanurate ou est le produit obtenu par une réaction d'addition entre un groupe isocyanate et un groupe fonctionnel choisi parmi un groupe alcool, primaire, secondaire ou tertiaire, un groupe amine secondaire, un groupe oxime, un groupe lactame, un groupe hydroxyle phénolique, un groupe N-alkylamide, un groupe imide, l'atome de carbone lié à un atome d'hydrogène acide dans un composé acide C-H,
dans lequel le groupe isocyanate bloqué est de préférence le produit obtenu d'une réaction d'addition entre un groupe isocyanate et un composé choisi parmi le 3,5-diméthylpyrazole et le 2-butanonoxime.

5. Agent d'impression de décharge selon la revendication 4, dans lequel l'agent de contrôle d'odeur est un hydrazide d'acide carboxylique ayant 1 à 4 groupes hydrazide dans sa structure moléculaire, l'hydrazide d'acide carboxylique étant de préférence un hydrazide d'un acide monocarboxylique aliphatique ayant 2 à 12 atomes de carbone ou un dihydrazide d'un acide dicarboxylique aliphatique ayant 2 à 12 atomes de carbone.

6. Agent d'impression de décharge selon l'une quelconque des revendications 1 à 5, comprenant en outre un agent colorant, qui est de préférence un pigment ou un colorant, lequel colorant davantage de préférence ne contient pas un groupe azo, une sous-structure anthraquinone, une sous-structure phtalocyanine, une sous-structure formazane ou une sous-structure dioxazine.

7. Composition de précurseur pour agent d'impression de décharge selon l'une quelconque des revendications 1 à 6, ladite composition de précurseur comprenant
(a) un composé acide sulfinique de formule (I) selon l'une quelconque des revendications 1 à 6
et au moins un de
(b) un épaississant selon l'une quelconque des revendications 1 à 6, et
(c) un agent de contrôle d'odeur selon l'une quelconque des revendications 1 à 7.

8. Composition de précurseur selon la revendication 7, dans laquelle la composition de précurseur comprend ledit épaississant en une quantité telle qu'une viscosité de 2 500 à 150 000 mPa·s à une température de 20 °C résulte après que la composition de précurseur a été dispersée dans l'eau en une quantité telle que ledit composé acide sulfinique de formule (I) représente 0,5 à 15 % en poids par rapport au poids total de la composition de précurseur et de l'eau.

9. Procédé de préparation d'un agent d'impression de décharge selon l'une quelconque des revendications 1 à 6, ledit procédé comprenant une étape de mélange
(a) dudit composé acide sulfinique de formule (I) selon l'une quelconque des revendications 1 à 6,
(b) d'un épaississant selon l'une quelconque des revendications 1 à 6,
(c) d'un agent de contrôle d'odeur selon l'une quelconque des revendications 1 à 6, et
(d) de l'eau.

10. Procédé de préparation d'un agent d'impression de décharge selon la revendication 9, dans lequel
(a) ledit composé acide sulfinique de formule (I),
et au moins un de
(b) ledit épaississant, et
(c) ledit agent de contrôle d'odeur
sont fournis sous la forme de la composition de précurseur selon la revendication 7 ou la revendication 8.

11. Procédé d'impression de décharge comprenant les étapes consistant à
(A appliquer un agent d'impression de décharge selon l'une quelconque des revendications 1 à 6 à un tissu coloré avec un colorant déchargeable pour former un profil dudit agent d'impression de décharge sur ledit tissu coloré de manière à donner un tissu coloré comprenant un profil non développé ;
(B) exposer le profil non développé sur le tissu coloré à une température de 100 °C ou plus à une pression qui est supérieure ou égale à la pression de l'atmosphère environnante de manière à former un profil développé sur ledit tissu coloré ;
dans lequel les étapes sont réalisées dans la séquence (A) à (B) et dans lequel d'autres étapes peuvent être éventuellement présentes entre ces étapes (A) et (B).

12. Procédé d'impression de décharge selon la revendication 11, dans lequel ledit colorant déchargeable est un colorant contenant au moins un d'un groupe azo, d'une sous-structure anthraquinone, d'une sous-structure phtalocyanine, d'une sous-structure formazane, et d'une sous-structure dioxazine.

13. Procédé d'impression de décharge selon la revendication 11 ou la revendication 12, dans lequel le profil non développé du tissu coloré est exposé dans l'étape (B) à une température de 200 °C ou moins, de préférence de 180 °C ou moins, davantage de préférence de 160 °C ou moins et/ou l'étape (B) est réalisée durant une période de 1 à 6 minutes.

14. Tissu coloré comprenant un profil susceptible d'être obtenu par un procédé d'impression de décharge selon l'une quelconque des revendications 11 à 13.
